# EUROPÄISCHE PATENTSCHRIFT

(11) **EP 0 826 758 B1**
(45) Veröffentlichungstag und Bekanntmachung des Hinweises auf die Patenterteilung: **02.01.2004**
(21) Anmeldenummer: 97810410.7
(22) Anmeldetag: 25.06.1997
(51) Int. Cl.: C09K 3/14, C22C 26/00, B24D 3/06

(54) **Verbundschneidkörper enthaltend Diamantpartikel und Verfahren zu deren Herstellung**
Composite cutting element containing diamond particles and method for its preparation
Elément de coupe composite contenant des particules de diamant et son procédé de préparation

(30) Priorität: 03.09.1996 DE 19635633
(43) Veröffentlichungstag der Anmeldung: 04.03.1998
(73) Patentinhaber: HILTI Aktiengesellschaft, 9494 Schaan (LI)
(72) Erfinder: Ritt, Walter, 6822 Schnifis (AT); Dorfmeister, Johann, 6807 Feldkirch-Tisis (AT); Magyari, Eugen, Dr., 4112 Bättwil (CH); Boretius, Manfred Horst, Dr., 9491 Ruggell (LI); Tillmann, Wolfgang, Dr., 6714 Nüziders (AT)
(74) Vertreter: Wildi, Roland

(56) Entgegenhaltungen:
- EP-A- 0 012 631
- EP-A- 0 046 374
- EP-A- 0 198 653
- EP-A- 0 295 151
- EP-A- 0 481 917
- US-E- R E26 879
- CHEMICAL ABSTRACTS, vol. 112, no. 22, 28.Mai 1990 Columbus, Ohio, US; abstract no. 203304, NAKAMURA, TSUTOMU ET AL: "Diamond grit sintering for high-strength tools" XP002049005 & JP 01 021 032 A (SUMITOMO ELECTRIC INDUSTRIES, LTD., JAPAN)
- CHEMICAL ABSTRACTS, vol. 107, no. 1, 4.Januar 1988 Columbus, Ohio, US; abstract no. 581421, ANON.: "High-strength bonding alloys for brazing cutters to carriers in cutting structures for use on drill bits" XP002049006 & RES. DISCL. (1987), 280, 511 CODEN: RSDSBB;ISSN: 0374-4353,

## Beschreibung

Die Erfindung betrifft Verbundschneidkörper zur abrasiven Bearbeitung von harten Untergründen, enthaltend Diamantpartikel gemäss dem Oberbegriff des Patentanspruchs 1. Weiters betrifft die Erfindung auch ein Verfahren zur Herstellung derartiger Verbundschneidkörper gemäss dem Oberbegriff des Patentanspruchs 8.

In vielen Anwendungen der Abbautechnik kommen Werkzeuge zum Einsatz, die zur Verbesserung der abrasiven Eigenschaften mit Diamantkörnern bestückt sind. Zur Erstellung von Bohrungen oder Durchbrüchen grösserer Durchmesser werden beispielsweise Hohlbohrkronen eingesetzt, die an ihrem vorderen Ende mit Schneidsegmenten ausgestattet sind. Auch Wandsägen und Trennscheiben für das Schneiden von Beton, Stein oder Keramik sind an ihrem Umfang mit Schneidsegmenten bestückt. Die Schneidsegmente bestehen im wesentlichen aus Diamanteinkristallen, die in eine metallische Matrix eingebettet sind. Die Komgrösse der für derartige Schneidsegmente verwendeten Diamanteinkristalle beträgt etwa 300 µm bis etwa 600 µm. Die Diamanteinkristalle sind nicht nur an der Oberfläche der Schneidsegmente angeordnet, sondem sind relativ gleichmässig über einen Teil der Höhe der Schneidsegmente verteilt. Bei der Bearbeitung des Untergrunds kommen immer jeweils die aus der Oberfläche des Matrixmaterials herausragenden Kanten der Diamanteinkristalle in Eingriff mit dem abzutragenden Material. Bei einem Verlust der an der Oberfläche befindlichen Diamanteinkristalle wird das Matrixmaterial verschlissen, bis neue Kanten von darunter liegenden Diamanteinkristallen freigelegt sind.

Im Einsatz können die Kanten allmählich verrunden oder die Diamanteinkristalle können brechen oder ganz aus dem Matrixmaterial herausfallen. Aufgrund der relativ grossen Korngrösse der Diamanteinkristalle ist die Anzahl der für die abrasive Bearbeitung des Untergrunds wirksamen Schneidkanten relativ gering. Fällt daher ein Diamanteinkristall wegen verrundeter Kanten, wegen Bruchs oder wegen Herausfallens aus dem Matrixmaterial aus, ist die Schneideffektivität des Schneidsegments solange beeinträchtigt, bis die fehlende Schneidkante durch Freilegen eines neuen Diamanteinkristalls wieder ersetzt ist. Dies wirkt sich nachträglich auf die erzielbare Schneidgeschwindigkeit des Schneidsegments aus.

Aus der US-A-4,591,364 ist es bekannt, für die Beschichtung von Schleifscheiben Diamantschneidkörper zu verwenden, die aus Diamantkörnern kleiner Korngrössen von typischerweise etwa 70 µm bis etwa 125 µm und vorwiegend metallischem Bindermaterial agglomeriert sind. Das Gemisch aus Diamantkörnern und Bindermaterial wird in einem Sinterprozess zu einem flächigen Sinterkuchen zusammengesintert. Der flächige Sinterkuchen wird sodann in kleine Teilchen zerbrochen und gesiebt Die Siebfraktion mit einer agglomerierten Komgrösse von etwa 149 µm bis etwa 250µm wird für die Beschichtung der Schleifscheiben herangezogen. Das Zerbrechen des Sinterkuchens führt zu einer relativ grossen Korngrössenverteilung der agglomerierten Verbundschneidkörper, so dass ein nicht unerheblicher Bestandteil der Agglomerate entweder zu gross oder zu klein für die Beschichtung von Schleifscheiben ist. Die ausgeschiedenen Fraktionen haben nicht nur recht unterschiedliche Komgrössen; durch den Vorgang des Zerbrechens des Sinterkuches ist auch ihre geometrische Form äusserst unregelmässig. Auch besteht die Gefahr, dass sie durch den Vorgang des Zerbrechens mechanisch geschädigt werden. Daher werden die ausgeschiedenen Korngrössenfraktionen allenfalls weiter zermahlen, um sie schliesslich als Schleif- und Poliermittel einzusetzen.

Aus der EP 0198653A1 ist ein abrasiver Körper bekannt bei dem Diamantpartikel in einer Konzentration von 80 bis 95 Volumenprozent im Körper vorhanden sind. Die Volumenskonzentration einer zweiten Phase des abrasiven Körpers liegt zwischen 5 % und 20 %. Über Diamant/Diamant-Verbindungen formen die Diamantpartikel eine kohärente skelettartige Masse. Die zweite Phase enthält Chrom und ein zweites Metall aus der Gruppe von Nickel, Eisen und Kobalt. Das Chrom liegt in der zweiten Phase in metallischer Form, als Chromcarbid und/oder in Form einer intermetallischen Verbindung, vor. Das zweite Metall liegt in metallischer Form und/oder als intermetallische Verbindung mit dem Chrom vor.

Aufgabe der vorliegenden Erfindung ist es, Verbundschneidkörper zu schaffen, die eine enge Korngrössenverteilung aufweisen und auch bezüglich ihrer geometrischen Form nicht wesentlich voneinander abweichen. Bei der Weiterverarbeitung der hergestellten Verbundschneidkörper soll Abfall weitgehend vermieden werden. Die Verbundschneidkörper sollen es erlauben, in der gewohnten Weise Schneidelemente und Schneidsegmente herzustellen, die eine grosse Schneidleistung aufweisen. Schneideffektivitätsverluste durch Verrunden der vorstehenden Kanten der Diamantkörner, duch Bruch oder Verlust von Diamantkörnern sollen weitgehend vermieden werden können bzw. im Fall ihres Auftretens schnellstmöglich kompensiert werden können. Der Herstellvorgang der Verbundschneidkörper soll möglichst einfach und reproduzierbar durchführbar sein. Auf mechanische Schädigungen der Verbundschneidkörper durch zusätzliche Zerbrechvorgänge und auf anschliessende Siebvorgänge soll weitgehend verzichtet werden können.

Die Lösung dieser Aufgaben besteht in Verbundschneidkömem, welche die im kennzeichnenden Abschnitt des Patentanspruchs 1 angeführten Merkmale aufweisen. Das erfindungsgemässe Verfahren zu ihrer Herstellung umfasst die im kennzeichnenden Abschnitt des Patentanspruchs 8 angeführten Verfahrensschritte. Insbesondere wird durch die Erfindung ein Verbundschneidkörper zur abrasiven Bearbeitung von harten Untergründen, beispielsweise Beton, geschaffen, der Diamantpartikel umfasst, die in eine Matrix aus vorwiegend metallischem Bindermaterial eingebettet sind. Die Korngrösse der eingesetzten Diamantpartikel ist kleiner als die Komgrösse der Verbundschneidkörper und ist grösser als 50µm und kleiner als 300 µm. Jeder Verbundschneidkörper ist in einem Einzelformgebungsprozess aus einer Mischung von Diamantpartikeln und Bindermaterial agglomeriert und gesintert und weist eine Korngrösse auf, die etwa 400 µm bis etwa 1200 µm beträgt. Die Volumenskonzentration der Diamantpartikel beträgt dabei etwa 20% bis etwa 70%.

Indem jeder Verbundschneidkörper in einem Einzelformgebungsprozess aus dem Gemisch von Diamantpartikeln und Bindermaterial hergestellt wird, kann die Korngrösse und die Form der Verbundschneidkörper in einem gewissen Umfang kontrolliert werden und ist der Herstellvorgang weitgehend reproduzierbar. Die derart hergestellten Verbundschneidkörper weisen eine sehr enge Korngrössenverteilung auf und ähneln einander in ihrer geometrischen Form. Daher können in der Regel alle hergestellten Verbundschneidkörper weiterverarbeitet werden. Die Korngrösse der Verbundschneidkörper von etwa 400 µm bis etwa 1200 µm entspricht weitgehend der Korngrösse der üblicherweise zur Weiterverarbeitung zu Schneidsegmenten verwendeten Diamanteinkristalle. Daher können die Verbundschneidkörper in der gewohnten Weise in Matrixmaterial eingebettet werden. Indem die Verbundschneidkörper aus einer Vielzahl von miteinander verbundenen kleinen Diamantpartikeln bestehen, stehen für die abrasive Bearbeitung des Untergrunds viele Kanten zur Verfügung. Dadurch wirkt sich eine Verrundung einzelner Kanten, ein Bruch oder ein Verlust eines Diamantpartikels nur unwesentlich auf die abrasiven Eigenschaften des Verbundschneidkörpers aus. Die Korngrösse der Diamantpartikel ist grösser als 50 µm und kleiner als 300 µm. Dabei werden verständlicherweise für Verbundschneidkörper kleinerer Korngrössen die feinkömigeren Diamantpartikel und für die grösseren Verbundschneidkörper die grösseren Diamantpartikel eingesezt. Diamantpartikel kleinerer Korngrössen sind nicht nur billiger als die üblicherweise eingesetzten grösseren Diamanteinkristalle. Die Diamantpartikel kleiner Korngrössen sind in der Regel auch weniger fehlerbehaftet. Dadurch weisen die einzelnen Diamantpartikel bessere mechanische Eigenschaften auf als die Diamanteinkristalle grösserer Korngrössen. Dieser Vorteil überträgt sich auch auf die mechanischen Eigenschaften der Verbundschneidkörper. Die Herstellung der Verbundschneidkörper erfolgt auf direktem Weg, ohne den Vorgang des Zerbrechens eines Sinterkuches mit anschliessendem Siebvorgang. Das Wegfallen der zusätzlichen Verarbeitungsschritte vereinfacht und verbilligt den Herstellvorgang der Verbundschneidkörper. Zudem ist dadurch die Gefahr einer mechanischen Beschädigung der Verbundschneidkörper beseitigt.

Indem die Volumenskonzentration der Diamantpartikel etwa 20% bis etwa 70%, vorzugsweise etwa 30% bis etwa 70%, des Volumens des agglomerierten Verbundschneidkörpers beträgt, stehen eine grosse Anzahl von schneidenden Kanten zur Verfügung. Selbst wenn im Einsatz einzelne Kanten verrunden oder ganze Diamantpartikel aus dem Verbund verloren gehen, sind noch immer genügend Diamantpartikel vorhanden, so dass die Schneidleistung der Verbundschneidkörper nur unwesentlich beeinträchtigt wird.

Die Verbundschneidkörper aus Bindermaterial und kleinen Diamantpartikeln besitzt eine ausreichend grosse Festigkeit und gute Bindeeigenschaften, wenn das Bindermaterial eine Legierung auf Nickel- oder Cobaltbasis unter Zugabe von Silicium und/oder Bor und grenzflächenaktiven Elementen, wie beispielsweise Chrom, umfasst. Silizium und Bor werden aus Gründen der Schmelzpunktabsenkung beigegeben. Chrom ist ein grenzflächenaktives Element, das eine feste chemische Einbindung der Diamantpartikel über eine Carbidbildung sicherstellt.

Besonders gute Härteeigenschaften bei gleichzeitig sehr guten Bindeeigenschaften werden erreicht, wenn die vorwiegend metallische Binderlegierung 1% - 25% Cr, 2% - 6% Si, 0,5% - 4 % B und 50% - 95 % Ni aufweist. Die Prozentangaben beziehen sich jeweils auf das Gesamtgewicht der Legierung. Die ggf. fehlenden Gewichtsprozente werden von weiteren Binderlegierungsbestandteilen, wie beispielsweise Fe oder Co eingenommen.

Die Agglomeration des Gemisches aus Diamantpartikel und Bindermaterial erfolgt mit Hilfe eines pastösen Trägers in den Kavitäten einer Maske. Die Maske kann ein dehnbarer Formkörper aus Kunststoff, beispielsweise Silikonkautschuk, sein, aus dem das Gemisch nach einem Trocknungsschritt bei moderaten Temperaturen, bei denen das organische Bindemittel ausgetrieben wird, wieder entformt wird bevor es zusammengesintert wird. Vorzugsweise erfolgt die Agglomeration und Sinterung in einer starren Maske aus Keramik, die von der vorwiegend metallischen Binderlegierung nicht benetzt wird. In diesem Fall ist die Entformung besonders einfach und erfolgt einfach durch Ausschütten der Maske. Geeignete keramische Materialien sind beispielsweise Aluminiumoxid, Zirkonoxid oder hexagonales Bomitrid. Das vorgetrocknete Gemisch kann bei der Verwendung von keramischen Masken für den Sintervorgang, bei dem mindestens die Solidustemperatur des metallischen Binders erreicht wird, in den Kavitäten der Maske verbleiben. Es können auch metallische Masken verwendet werden. In diesem Fall bleibt die Maske nach erfolgter Agglomeration und Sinterung Bestandteil des Verbundschneidkörpers und gibt diesem zusätzliche Festigkeit.

Die Verbundschneidkörper können in der gewohnten Weise direkt auf Schleifscheiben oder dergleichen aufgebracht werden, indem sie beispielsweise in eine Kunstharzbeschichtung der Schleifscheibenoberfläche eingebettet werden. In einer vorteihaften Anwendung der Erfindung werden die Verbundschneidkörper zu abrasiven Schneidelementen weiterverarbeitet, die direkt miteinander heissverpresst sind. Der Heisspressvorgang erfolgt bei einem Druck von etwa 5 - 50 MPa. Die Temperatur beträgt etwa 700°C bis etwa 1000°C.

Der besondere Vorteil der Verbundschneidkörper aus Diamantkörnern kleiner Korngrössen und Bindermaterial besteht darin, dass sie in gewohnter Weise zu Diamantsegmenten weiterverarbeitet werden können. In der Weiterverarbeitung unterscheiden sich die Verbundschneidkörper nicht von den bislang verwendeten Diamanteinkristallen gleicher Korngrösse. Die Verbundschneidkörper sind in ein vorwiegend metallisches Matrixmaterial eingebettet, welches weicher ist als das vorwiegend metallische Bindermaterial der Verbundschneidkörper. Die derart ausgebildeten Diamantsegmente besitzen den Vorteil, dass sie in zweifacher Hinsicht selbstschärfend sind. Zum einen wird im Einsatz der Diamantsegmente das weichere Matrixmaterial verschlissen und es kommen immer wieder neue, frische Verbundschneidkörper an die Oberfläche. Andererseits findet auch in den Verbundschneidkörpern selbst eine Selbstschärfung statt, indem auch das härtere Bindermaterial der Verbundschneidkörper in einem gewissen Umfang verschlissen wird und immer neue kleine Diamantpartikel an die Oberfläche des Verbundschneidkörpers gelangen und mit ihren Kanten schneidwirksam werden.

Das erfindungsgemässe Verfahren zur Herstellung von Verbundschneidkörpern zur abrasiven Bearbeitung von harten Untergründen, beispielsweise Beton, bei dem ein Gemisch von Diamantpartikeln einer Komgrösse, die kleiner ist als die Korngrösse der Verbundschneidkörper, und vorwiegend metallisches Bindermaterial zu einem Verbund agglomeriert und gesintert wird, zeichnet sich dadurch aus, dass Diamantpartikel ausgewählt werden, deren Komgrösse grösser als etwa 50 µm und kleiner als etwa 300 µm ist, und dass das Gemisch aus Diamantpartikeln und Bindermaterial jeweils in einem Einzelformgebungsprozess zu einem Verbundschneidkörper der Korngrösse von etwa 400 µm bis etwa 1200 µm geformt und gesintert wird. Die Verbundschneidkörper müssen nicht mehr gebrochen und anschliessend gesiebt werden, sondem besitzen bereits nach dem Einzelformgebungsprozess die gewünschte Korngrösse. Praktisch 100% der derart erzeugten Verbundschneidkörper stehen für die Weiterverarbeitung zur Verfügung. Es fällt kein Abfall an, der nicht die gewünschte Korngrösse aufweist. Durch den Einzelformgebungsprozess ist auch die Form der erzeugten Verbundschneidkörper weitgehend kontrollierbar, was ihre Weiterverarbeitung erleichtert.

Der erfindungsgeässe Einzelformgebungsprozess besteht darin, dass das Gemisch aus Diamantkörnern und Bindermaterial zur Formgebung mittels eines pastösen Trägers in Einzelkavitäten von Masken aus Keramik oder flexiblem Kunststoff, vorzugsweise Silikonkautschuk, eingebracht wird, durch Temperaturbehandlung der organische Anteil des Bindermaterials ausgetrieben wird und das vorbehandelte Gemisch bei einer Temperatur von etwa 900°C bis etwa 1300°C vakuumgesintert wird, wobei es bei Masken aus Keramik oder Metall für den Sintervorgang in den Kavitäten verbleibt bzw. auf einen Keramikteller oder ein Korundbett aufgegeben wird. Bei einer Sinterung auf einem Korundbett erfolgt die Trennung der Verbundschneidkömer von den Korundpartikeln durch Siebung. Bei einer keramische Maske können die Verbundschneidkörper einfach ausgeschüttet werden. Bei einer metallischen Maske bildet diese anschliessend einen Bestandteil des Verbundschneidkorns und verstärkt dessen Struktur.

Als metallisches Bindermaterial wird eine Legierung auf Nickel- oder Cobaltbasis unter Zugabe von Silizium und/oder Bor und grenzflächenaktiven Elementen, wie beispielsweise Chrom, gewählt. Die Zusammensetzung der Binderlegierung beträgt 1% - 25% Cr, 2% - 6% Si, 0,5% - 4 % B und 50% - 95 % Ni aufweist. Die Prozentangaben beziehen sich jeweils auf das Gesamtgewicht der Legierung. Die ggf. fehlenden Gewichtsprozente werden von weiteren Binderlegierungsbestandteilen, wie beispielsweise Fe oder Co eingenommen. Dabei wird die Volumenskonzentration der Diamantpartikel zu etwa 20% bis etwa 80%, vorzugsweise etwa 30% bis etwa 70%, des Volumens des agglomerierten Verbundschneidkörpers gewählt. Mit der gewählten Zusammensetzung und dem hohen Anteil an Diamantpartikel können Verbundschneidkörper hergestellt werden, die bei einer ausreichend hohen mechanischen Festigkeit die gewünschten guten Schneideigenschaften aufweisen.

Im folgenden wird die Erfindung unter Bezugnahme auf die nicht massstabsgetreuen, schematischen Darstellungen näher erläutert. Es zeigen:
Fig. 1 eine Ansicht eines Verbundschneidkorns;
Fig. 2 eine Ansicht der schneidwirksamen Stirnfläche eines Diamantsegments;
Fig. 3 eine Darstellung zur Veranschaulichung des Schneidvorgangs mit einem konventionellen Diamantsegment; und
Fig. 4 eine Darstellung zur Veranschaulichung des Schneidvorgangs mit einem Diamantsegment gemäss der Erfindung mit Verbundschneidkörpern.

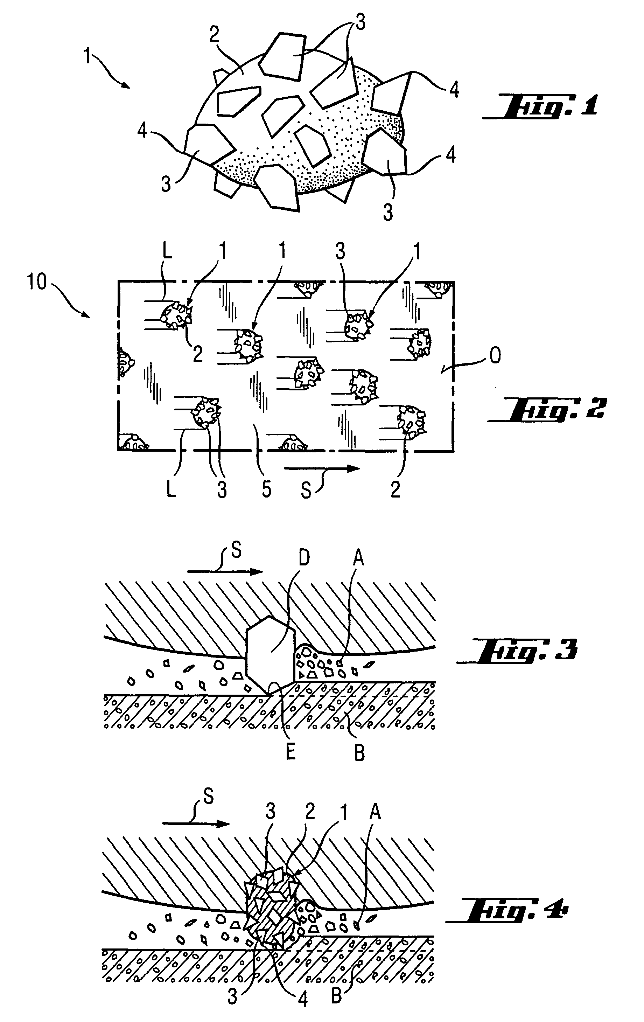

Ein erfindungsgemässer Verbundschneidkörper ist in Fig. 1 gesamthaft mit dem Bezugszeichen 1 versehen. Er umfasst eine Vielzahl von Diamantpartikeln 3, die in ein vorwiegend metallisches Bindermaterial 2 eingebettet sind. Die Diamantpartikel 3 besitzen eine Korngrösse, die grösser als 50µm und kleiner als 300 µm ist, und werden in einem Einzelformgebungsprozess zu Verbundschneidkörpern 1 mit einer Korngrösse von etwa 400 µm bis etwa 1200 µm agglomeriert und gesintert. Die in Oberflächennähe in das vorwiegend metallische Bindermaterial 2 eingebetteten Diamantpartikel 3 ragen mit ihren Kanten 4 aus der Oberfläche des Verbundschneidkörpers 1.

Das vorwiegend metallische Bindermaterial 2 umfasst eine Legierung auf Nickel- oder Cobaltbasis unter Zugabe von Silizium und/oder Bor und grenzflächenaktiven Elementen, wie beispielsweise Chrom. Silizium und Bor werden aus Gründen der Schmelzpunktabsenkung für den Sinterprozess beigegeben. Chrom ist ein grenzflächenaktives Element, das eine feste chemische Einbindung der Diamantpartikel über eine Carbidbildung sicherstellt. Das vorwiegend metallische Bindermaterial besteht vorzugsweise aus einer Legierung von 1% - 25% Cr, 2% - 6% Si, 0,5% - 4% B und 50% - 95% Ni. Die Prozentangaben beziehen sich jeweils auf das Gesamtgewicht der Legierung. Die ggf. fehlenden Gewichtsprozente werden von weiteren Binderlegierungsbestandteilen, wie beispielsweise Fe oder Co eingenommen. Die mittlere Korngrösse des Bindermaterials beträgt etwa 5 µm bis etwa 100 µm, vorzugsweise ist sie kleiner als 20 µm.

Das Bindermaterial wird vor der Vermischung mit den Diamantpartikeln in einem Aufbaugranulationsprozessschritt auf eine der Korngrössegebracht, die der Grosse der Diamantpartikel vergleichbar ist. Dies verbessert die gleichmässige Durchmischung der einzelnen Bestandteile der Verbundschneidkörper 1. Zur Herstellung der Verbundschneidkörper 1 wird das Gemisch aus Diamantpartikeln 3 und Bindermaterial 2 mittels eines pastösen Trägers, beispielsweise Wachse, Alkohole mit rheologischen Komponenten, die eine Entmischung verhindern sollen, in die Kavitäten einer Maske eingebracht. Die Maske kann ein starres Gebilde, beispielsweise aus Keramik oder Metall sein. Sie kann auch von einem dehnbaren Formkörper aus einem Kunststoff, beispielsweise Silikonkautschuk, bestehen. Nach einem Trocknungsschritt, bei dem bei moderaten Temperaturen von etwa 50°C bis etwa 70°C der organische Anteil des Binders ausgetrieben wird, erfolgt ein Vakuumsintervorgang, bei dem mindestens die Solidustemperatur des vorwiegend metallischen Binders 2 erreicht wird. Die dabei verwendeten Sintertemperaturen liegen typischerweise bei etwa 900°C bis etwa 1300°C. Erfolgte der Trockungsschritt in einer keramischen oder metallischen Maske, kann das vorgetrockente Gemisch für den Vakuumsintervorgang in der Maske verbleiben. Bei geeigneter Wahl des Materials für eine metallische Make muss der gesinterte Verbundschneidkörper 1 anschliessend nicht einmal entformt werden, sondern kann die Maske Bestandteil des Verbundschneidköpers 1 bleiben. Abgesehen von dem Vorteil, dass der Entformungsschritt entfällt, stellt die metallische Maske ein zusätzliches strukturgebendes Merkmal des Verbundschneidkörpers dar.

Erfolgt die Mischung und Trockung in einer flexiblen Maske aus Kunststoff, beispielsweise Silikonkautschuk, wird das vorgetrocknete Gemisch vor dem Vakuumsintervorgang aus der Form entnommen. Aufgrund der hohen Dehnbarkeit der Kunststofform ist eine einfache Entformbarkeit gewährleistet. Die Stabilität des vorgetrockneten Gemisches ist ausreichend hoch, um eine sichere weitere Handhabung sicherzustellen. Für den Sinterprozess wird das Gemisch auf einen Keramikteller, beispielsweise aus Aluminiumoxid, oder auf ein Korundbett aufgegeben. Nach erfolgter Vakuumsinterung können die Verbundschneidkörper 1 durch Siebung von den Korundkömem getrennt werden.

Der Einzelformgebungsprozess hat den Vorteil, dass die Grösse und die Form der Verbundschneidkörper 1 einstellbar und weitgehend kontrollierbar ist. Die derart erzeugten Verbundschneidkörper 1 weisen somit in ihrer Gesamtheit die gewünschte Korngrösse und Form auf. Sie können unmittelbar als abrasive Schneidkörper eingesetzt werden, beispielsweise indem sie direkt in eine Kunstharzbeschichtung einer Schleifscheibe eingebettet werden. Die erfindungsgemässen Verbundschneidkörper 1 können aber auch zu grösseren abrasiven Schneidelementen verbunden werden. Dazu werden die Verbundschneidkörper 1 beispielsweise in einem Heisspressverfahren miteinander verbunden. Dabei treten Drücke von etwa 5 MPa bis etwa 50 MPa auf. Die Verfahrenstemperaturen liegen bei etwa 700°C bis etwa 1000°C. Dabei wird das vorwiegend metallische Bindermaterial der einzelnen Verbundschneidkörper 1 miteinander verschmolzen und es wird ein amorphes Schneidelement in der gewünschten Form erzeugt, aus dessen Oberfläche die Kanten 4 der oberflächennahen Diamantpartikel 3 ragen. Die amorphen Schneidelemente können unter der Voraussetzung der Entformbarkeit in beliebiger Gestalt hergestellt werden.

In einer besonders vorteilhaften Anwendung der Verbundschneidkörper 1 werden diese in gewohnter Weise wie Diamanteinkristalle grösserer Komgrössen zu Diamantsegmenten für Bohrkronen, Trennscheiben, Wandsägen und dergleichen weiterverarbeitet. Ein Ausschnitt eines derartigen Diamantsegments ist in Fig. 2 dargestellt und gesamthaft mit dem Bezugszeichen 10 bezeichnet. Das Diamantsegment 10 umfasst eine Anzahl von Verbundschneidkörpern 1, die in ein metallisches Matrixmaterial 5 eingebettet sind. Das metallische Matrixmaterial 5 ist weicher als das vorwiegend metallische Bindermaterial 2 der Verbundschneidkörper 1. Ein Beispiel für ein geeignetes Matrixmaterial 5 ist in der US-A-5,186,724 (entspricht EP-B-0 481 917) beschrieben, deren Inhalt hiermit zum integralen Bestandteil der vorliegenden Patentanmeldung erklärt wird. Die Konzentration der Verbundschneidkörper 1 entspricht weitgehend der Konzentration der Diamanteinkristalle grösserer Korngrössen bei konventionellen Diamantschneidsegmenten. Sie beträgt etwa 5% bis etwa 40% bezogen auf das Volumen des Diamantschneidsegments 10.

Die oberflächennahen Diamantpartikel 3 der Verbundschneidkörper 1 ragen aus der Oberfläche O des Diamantschneidsegments 10 und bilden eine Vielzahl von schneidwirksamen Kanten, deren Schneidspuren im Segment in Fig. 2 durch Linien L angedeutet sind. Die Bearbeitungsrichtung ist dabei durch den Pfeil S angedeutet.

Fig. 3 und 4 dienen der Veranschaulichung des Schneidvorgangs mit einem konventionellen Schneidsegment (Fig. 3) und mit einem Schneidsegment 10 mit erfindungsgemässen Verbundschneidkörpern 1 (Fig. 4). Der Pfeil S gibt jeweils die Bearbeitungsrichtung an. Fig. 3 zeigt eine Kante E eines Diamanteinkristalls D, die bei der abrasiven Bearbeitung in Eingriff mit dem Untergrund B kommt und Material A abträgt. Dagegen weist der gleich grosse Verbundschneidkörper 1 eine Vielzahl von Kanten 4 auf, die aus der Oberfläche des Bindermaterials 2 herausragen und zu oberflächennahen kleinen Diamantpartikeln 3 gehören. Es ist nicht bloss eine Kante E eines Diamanteinkristalls D in Eingriff mit dem Untergrund B (Fig. 3), sondem dieser wird von einer Vielzahl von Kanten 4 bearbeitet, die alle zum Materialabtrag A beitragen. Sollte bei dem Schneidsegement gemäss Fig. 3 die bearbeitende Kante E stumpf werden oder der Diamanteinkristall D aus dem Diamantsegment fallen, fällt diese Schneide zur Gänze für die abrasive Bearbeitung aus, solange bis genügend Matrixmaterial des Diamantschneidsegments abgetragen ist, so dass eine neuer Diamanteinkristall D aus der Oberfläche des Diamantschneidsegments herausragt. Bei dem Diamantschneidsegment gemäss der Erfindung stehen eine Reihe von Kanten 4 des Verbundschneidkörpers 1 in Eingriff mit dem Untergrund B. Sollte eine Kante 4 stumpf werden oder ein Diamantpartikel 3 durch Bruch oder Verlust entfallen, wirkt sich dies nur unwesentlich aus, da genügend weitere Kanten 4 zur Verfügung stehen. Auch muss nicht erst eine grosse Menge von Matrixmaterial des Diamanschneidsegments abgetragen werden, bis die unwirksame oder verlorene Kante 4 ersetzt ist. Es muss nur eine geringe Menge an Bindermaterial des Verbundschneidkörpers 1 verschlissen werden, bis neue Diamantpartikel 3 freigelegt sind, deren Kanten 4 zum Materialabtrag A beitragen. Dieser Selbstschärfungseffekt ist dem gewöhnlichen Schärfungseffekt, bei dem neue Verbundschneidkörper 1 im Matrixmaterial des Diamantschneidsegments freigelegt werden, überlagert. Das erfindungsgemässe Diamantschneidsegment ist somit doppelt selbstschärfend.

## Patentansprüche

1. Verbundschneidkörper zur abrasiven Bearbeitung von harten Untergründen (B), beispielsweise Beton, umfassend Diamantpartikel (3), deren Korngrösse kleiner ist als die Komgrösse des Verbundschneidkörpers, die in eine Matrix aus vorwiegend metallischem Bindermaterial (2) eingebettet sind, **dadurch gekennzeichnet, dass** jeder Verbundschneidkörper (1) in einem Einzelformgebungsprozess aus einer Mischung von Diamantpartikeln (3) einer Komgrösse grösser als 50 µm und kleiner als 300 µm und Bindermaterial (2) agglomeriert und gesintert ist und die Korngrösse des Verbundschneidkörpers (1) etwa 400 µm bis etwa 1200 µm beträgt, wobei die Volumenskonzentration der Diamantpartikel (3) etwa 20% bis etwa 70% des Volumens des agglomerierten Verbundschneidkörpers (1) beträgt.

2. Verbundschneidkörper nach Anspruch 1, **dadurch gekennzeichnet**, das das Bindermaterial (2) eine Legierung auf Nickel- oder Cobaltbasis unter Zugabe von Silicium und/oder Bor und grenzflächenaktiven Elementen, wie beispielsweise Chrom, umfasst.

3. Verbundschneidkörper nach Anspruch 2, **dadurch gekennzeichnet, dass** die Binderlegierung 1% - 25% Cr, 2% - 6% Si, 0,5% - 4 % B und 50% 95 % Ni aufweist, wobei die Prozentangaben sich jeweils auf das Gesamtgewicht der Legierung beziehen und ggf. fehlende Gewichtsprozente von weiteren Binderlegierungsbestandteilen, wie beispielsweise Fe oder Co eingenommen werden.

4. Verbundschneidkörper nach einem der vorangehenden Ansprüche, **dadurch gekennzeichnet, dass** die Volumenskonzentration der Diamantpartikel (3) etwa 30% bis etwa 70%, des Volumens des agglomerierten Verbundschneidkörpers (1) beträgt.

5. Verbundschneidkörper nach einem der vorangehenden Ansprüche, **dadurch gekennzeichnet, dass** die Agglomeration des Gemisches aus Diamantpartikel (3) und Bindermaterial (2) in einer keramischen Maske, beispielsweise aus Aluminiumoxid, Zirkonoxid oder hexagonalem Bomitrid erfolgt.

6. Abrasives Schneidelement **gekennzeichnet durch** eine Vielzahl von Verbundschneidkörpern (1) gemäss einem der Ansprüche 1 - 5, die unter erhöhter Temperatur miteinander verpresst sind.

7. Diamantschneidsegment **gekennzeichnet durch** eine Vielzahl von Verbundschneidkörpern (1) gemäss einem der Ansprüche 1 - 5, die in ein vorwiegend metallisches Matrixmaterial (5) eingebettet sind, welches weicher ist als das vorwiegend metallische Bindermaterial (2) der Verbundschneidkörper (1).

8. Verfahren zur Herstellung von Verbundschneidkörpern nach Anspruch 1 zur abrasiven Bearbeitung von harten Untergründen (B), beispielsweise Beton, bei dem ein Gemisch von Diamantpartikeln (3), deren Korngrösse kleiner ist als die Korngrösse der Verbundschneidkörper, und vorwiegend metallisches Bindermaterial (2) zu einem Verbund agglomeriert und gesintert wird, **dadurch gekennzeichnet, dass** die Korngrösser der Diamantpartikeln (3) grösser ist als 50 µm und kleiner als 300 µm, und dass das Gemisch aus Diamantpartikel (3) und Bindermaterial (2) jeweils in einem Einzelformgebungsprozess zu einem Verbundschneidkörper (1) der Korngrösse von etwa 400 µm bis etwa 1200 µm geformt und gesintert wird.

9. Verfahren nach Anspruch 8, **dadurch gekennzeichnet, dass** das Gemisch aus Diamantkörnern (3) und Bindermaterial (2) zur Formgebung mittels eines pastösen Trägers in Einzelkavitäten von Masken aus flexiblem Kunststoff, vorzugsweise Silikonkautschuk, aus Keramik, vorzugsweise Aluminiumoxid, Zirkonoxid oder hexagonales Bomitrid, oder Metall eingebracht wird, durch Temperaturbehandlung der organische Anteil des Bindermaterials ausgetrieben wird und das vorbehandelte Gemisch bei einer Temperatur von etwa 900°C bis etwa 1300°C vakuumgesintert wird, wobei es bei Masken aus Keramik oder Metall in den Kavitäten verbleibt bzw. auf einen Keramikteller oder ein Korundbett aufgegeben wird.

10. Verfahren nach Anspruch 8 oder 9, **dadurch gekennzeichnet, dass** als metallisches Bindermaterial (2) eine Legierung auf Nickel- oder Cobaltbasis unter Zugabe von Chrom, Silicium und/oder Bor gewählt wird, dessen Zusammensetzung 1% - 25% Cr, 2% - 6% Si, 0,5% - 4% B und 50% - 95% Ni umfasst, wobei die Prozentangaben sich jeweils auf das Gesamtgewicht der Legierung beziehen und ggf. fehlende Gewichtsprozente werden von weiteren Binderlegierungsbestandteilen, wie beispielsweise Fe oder Co, eingenommen werden, und dass die Volumenskonzentration der Diamantpartikel (3) zu etwa 20% bis etwa 80%, vorzugsweise etwa 30% bis etwa 70%, des Volumens des agglomerierten Verbundschneidkörpers gewählt wird.

## Claims

1. Composite cutting element for abrasive machining of hard substrates (B), for example concrete, comprising diamond particles (3) whose grain size is smaller than the grain size of the composite cutting element and which are embedded in a matrix of primarily metallic binder material (2), **characterised in that** each composite cutting element (1|) is agglomerated and sintered in a single shaping process from a mixture of diamond particles (3) with a grain size larger than 50 µm and smaller than 300 µm and binder material (2), and **in that** the grain size of the composite cutting element (1 ) is approximately 400 µm to approximately 1200 µm, wherein the concentration by volume of the diamond particles (3) is approximately 20% to approximately 70% of the volume of the agglomerated composite cutting element (1 ).

2. Composite cutting element according to Claim 1, **characterised in that** the binder material (2) contains a nickel- or cobalt-based alloy, with the addition of silicon and/or boron and surface active elements such as chromium.

3. Composite cutting element according to Claim 2, **characterised in that** the binder alloy contains 1% - 25% Cr, 2% - 6% Si, 0.5% - 4% B and 50% - 95% Ni, wherein the percentage indications relate to the total weight of the alloy and any shortfall in the percentages by weight of further binder alloy components, such as Fe or Co, is compensated for.

4. Composite cutting element according to one of the preceding claims, **characterised in that** the concentration by volume of the diamond particles (3) is approximately 30% to approximately 70% of the volume of the agglomerated composite cutting element (1).

5. Composite cutting element according to one of the preceding claims, **characterised in that** the agglomeration of the mixture of diamond particles (3) and binder material (2) takes place in a ceramic mask manufactured, for example, from aluminium oxide, zirconium oxide or hexagonal boron nitride.

6. Abrasive cutting element **characterised by** a large number of composite cutting elements (1 ) according to one of Claims 1 - 5 which are pressed together at high temperature.

7. Diamond cutting segment, **characterised** b a large number of composite cutting elements (1 ) according to one of Claims 1 - 5, which are embedded in a primarily metallic matrix material (5) that is softer than the primarily metallic binder material (2) of the composite cutting elements (1).

8. Method according to Claim 1 for manufacturing composite cutting elements for the abrasive machining hard substrates (B), for example concrete, wherein a mixture of diamond particles (3) whose grain size is smaller than the grain size of the composite cutting elements, and primarily binder material (2) is agglomerated and sintered into a composite material, **characterised in that** the grain size of the diamond particles (3) is greater than 50 µm and smaller than 300 µm, and **in that** the mixture is formed and sintered from diamond particles (3) and binder material(2) in a single shaping process to form a composite cutting element (1) with a grain size of approximately 400 µm to approximately 1200 µm.

9. Method according to Claim 8, **characterised in that** the mixture of diamond grains (3) and binder material (2) for shaping by means of a pasty carrier is fed into individual cavities of masks of flexible plastic, preferably silicone rubber, of ceramic, preferably aluminium oxide, zirconium oxide or hexagonal boron nitride, or metal, the organic portion of the binder material is driven out by temperature treatment, and the pre-treated mixture is vacuum sintered at a temperature from approximately 900°C to approximately 1300°C, wherein it remains in the cavities in the case of ceramic or metal masks or is fed to a ceramic plate or corundum bed.

10. Method according to Claim 8 or 9, **characterised in that** a nickei- or cobalt-based alloy is chosen as the metallic binder material (2) with the addition of chromium, silicon and/or boron, which alloy comprises 1% - 25% Cr, 2% - 6% Si, 0.5% - 4% B and 50% - 95% Ni, wherein the percentage indications always relate to the total weight of the alloy and any shortfall in the percentages by weight are compensated for by further binder alloy components, e.g. Fe or Co, and **in that** the concentration by volume of the diamond particles (3) is chosen as approximately 20% to approximately 80%, preferably approximately 30% to approximately 70%, of the volume of the agglomerated composite cutting element.

## Revendications

1. Corps de coupe composite pour le travail abrasif de supports durs (B), par exemple de béton, comprenant des particules de diamant (3) dont la granulométrie est inférieure à celle du corps de coupe composite et qui sont encastrées dans une matrice en liant à dominante métallique (2), **caractérisé en ce que** chaque corps de coupe composite (1) est aggloméré et fritté lors d'un processus de mise en forme unique à partir d'un mélange de particules de diamant (3) d'une granulométrie supérieure à 50 µm et inférieure à 300 µm et de liant (2), et la granulométrie du corps de coupe composite (1) est d'environ 400 µm à environ 1 200 µm, la concentration en volume des particules de diamant (3) étant d'environ 20 % à environ 70 % du volume du corps de coupe composite aggloméré (1).

2. Corps de coupe composite selon la revendication 1, **caractérisé en ce que** le liant (2) comprend un alliage à base de nickel ou de cobalt additionné de silicium et/ou de bore et d'éléments d'interface, comme par exemple de chrome.

3. Corps de coupe composite selon la revendication 2, **caractérisé en ce que** l'alliage de liant comprend de 1 % à 25 % de Cr, de 2 % à 6 % de Si, de 0,5 % à 4 % de B et de 50 % à 95 % de Ni, les pourcentages indiqués se rapportant chacun au poids total de l'alliage, et les pourcentages en poids éventuellement manquants correspondant à d'autres composants de l'alliage de liant, comme par exemple Fe ou Co.

4. Corps de coupe composite selon une des revendications précédentes, **caractérisé en ce que** la concentration en volume des particules de diamant (3) est d'environ 30 % à environ 70 % du volume du corps de coupe composite aggloméré (1).

5. Corps de coupe composite selon une des revendications précédentes, **caractérisé en ce que** l'agglomération du mélange de particules de diamant (3) et de liant (2) s'effectue dans un masque céramique, par exemple en alumine, zircone ou nitrure de bore hexagonal.

6. Élément de coupe abrasif, **caractérisé par** une pluralité de corps de coupe composites (1) selon une des revendications 1 à 5, lesquels sont compactés entre eux à une température élevée.

7. Segment de coupe diamanté, **caractérisé par** une pluralité de corps de coupe composites (1) selon une des revendications 1 à 5, lesquels sont encastrés dans un matériau de matrice à dominante métallique (5) qui est plus tendre que le liant à dominante métallique (2) du corps de coupe composite (1).

8. Procédé de fabrication de corps de coupe composites selon la revendication 1, pour le travail abrasif de supports durs (B), par exemple de béton, dans lequel un mélange de particules de diamant (3), dont la granulométrie est inférieure à celle des corps de coupe composites, et de liant à dominante métallique (2) est aggloméré sous la forme d'une matière composite et fritté, **caractérisé en ce que** la granulométrie des particules de diamant (3) est supérieure à 50 µm et inférieure à 300 µm, et **en ce que** le mélange de particules de diamant (3) et de liant (2) est mis en forme et fritté lors d'un processus de mise en forme unique pour obtenir un corps de coupe composite (1) d'une granulométrie d'environ 400 µm à environ 1 200 µm.

9. Procédé selon la revendication 8, **caractérisé en ce que**, pour sa mise en forme, le mélange de grains de diamant (3) et de liant (2) est introduit au moyen d'un support pâteux dans des cavités individuelles de masques en matière plastique souple, de préférence caoutchouc de silicone, en céramique, de préférence alumine, zircone ou nitrure de bore hexagonal, ou en métal, la fraction organique du liant est expulsée par traitement thermique, et le mélange prétraité est fritté sous vide à une température d'environ 900 °C à environ 1 300 °C, dans les masques en céramique ou en métal le mélange restant dans les cavités, respectivement étant déposé sur un plateau céramique ou sur un lit de corindon.

10. Procédé selon la revendication 8 ou 9, **caractérisé en ce que** le liant métallique choisi (2) est un alliage à base de nickel ou de cobalt additionné de chrome, de silicium et/ou de bore, dont la composition comprend de 1 % à 25 % de Cr, de 2 % à 6 % de Si, de 0,5 % à 4 % de B et de 50 % à 95 % de Ni, les pourcentages indiqués se rapportant chacun au poids total de l'alliage, et les pourcentages en poids éventuellement manquants correspondant à d'autres composants de l'alliage de liant, comme par exemple Fe ou Co, et **en ce que** la concentration en volume des particules de diamant (3) est d'environ 20 % à environ 80 %, de préférence d'environ 30 % à environ 70 % du volume du corps de coupe composite aggloméré.
